# EUROPÄISCHE PATENTANMELDUNG

(11) **EP 1 065 596 A1**
(43) Veröffentlichungstag der Anmeldung: **03.01.2001**
(21) Anmeldenummer: 99112474.4
(22) Anmeldetag: 30.06.1999
(51) Int. Cl.: G06F 12/02

(54) **Verfahren zur Organisation von Datensätzen im Arbeitsspeicher eines Datenverarbeitungsgerätes**

(71) Anmelder: SIEMENS AKTIENGESELLSCHAFT, 80333 München (DE)
(72) Erfinder: Freiwald, Jürgen, 85635 Höhenkirchen (DE); Brixel, Olaf, 80997 München (DE)

(57) **Zusammenfassung**

Verfahren zur Organisation von Datensätzen im Arbeitsspeicher eines Datenverarbeitungsgerätes, wobei die Verwaltungsinformationen zu jedem Datensatz nicht zentral in einer Tabelle, sondern dezentral in unmittelbarer Nähe des Datensatzes angeordnet werden.

## Beschreibung

Die vorliegende Erfindung betrifft ein Verfahren zur Organisation von Datensätzen im Arbeitsspeicher eines Datenverarbeitungsgerätes. Insbesondere betrifft das Verfahren die Organisation des physikalischen Speichers eines Multitasking- und Multiapplikations-Microcontrollers für Chipkartenanwendungen.

Chipkartenanwendungen unterscheiden sich hinsichtlich des Ladevorgangs und der Binärdarstellung im Speicher erheblich von Standard Microcontroller- oder PC- bzw. Workstationssystemen.

Bei PC-Systemen wird der benötigte Code oder die Daten zur Laufzeit aus einem Hintergrundsystem in den eigentlichen Arbeitsspeicher (RAM) der CPU geladen. Der Ladevorgang holt die Daten aus dem Hintergrundsystem (Speicherformat) und kopiert sie in den Arbeitsspeicher (Laufzeitformat). Das Speicherformat der Daten ist bestimmt durch die Anforderungen des Hintergrundsystems und durch die Anforderungen des allgemein vorliegenden Linkkonzepts. Das Laufzeitformat ist bestimmt durch die aktuell laufenden Prozesse und deren Anforderungen.

Der Lader modifiziert die Daten beim Laden so, daß der Code in dem zur Verfügung stehenden Speicherbereich ablaufen kann. Der dynamische Lader kann dynamisch Verknüpfungen im Code auflösen. Dies bedeutet im Detail, daß einzelne Speicherstellen, die symbolische Verweise auf andere Speicherstellen haben, umprogrammiert werden, indem der symbolische Verweis durch einen physikalischen, unter diesen Laufzeitbedingungen gültigen Verweis ausgetauscht wird.

Auf Chipkarten gibt es kein Hintergrundsystem im Sinne von Festplatten oder Netzwerken. Code wird einmal geladen oder sogar gleich bei der Produktion einmalig als ROM gefertigt. Dies bedeutet, daß Referenzen nicht mehr geändert werden können. Andererseits erfordert der Markt Multiapplikations- und Multitaskingfähigkeiten, die eine ähnliche Flexibilität in der Verknüpfung von Code und Daten voraussetzen, wie beim PC. Da eine dynamische Anpassung der Daten selber zur Laufzeit nicht möglich ist, und die Verwendung von Umsetztabellen sehr aufwendig und speicherverschwendend ist, muß nach neuen Lösungen gesucht werden. Die direkte Verwendung von physikalischen Adressen scheidet aus, da der physikalische bzw. logische Adressraum begrenzt ist und von allen Applikationen verwendet wird. Außerdem kann sich die physikalische Darstellung ändern (neuere Version der Software), oder sie ist zum Übersetzungszeitpunkt unbekannt.

Es ist daher Aufgabe der vorliegenden Erfindung, ein Verfahren zur Organisation von Datensätzen im Arbeitsspeicher eines Datenverarbeitungsgeräts dergestalt weiterzubilden, daß die Organisation der Verwaltungsdaten nur so viel Speicherplatz benötigt, wie tatsächlich erforderlich ist, und daß die Struktur so verbessert wird, daß die Fehlersuche (Debuggen) erheblich vereinfacht wird. Erfindungsgemäß wird diese Aufgabe dadurch gelöst, daß die Verwaltungsinformationen zu jedem Datensatz dezentral in unmittelbarer Nähe des Datensatzes angeordnet werden.

Vorzugsweise werden diese Verwaltungsinformationen in Form eines direkt vor dem Datensatz in Speicher angeordneten Blokkes (Header) angeordnet. Dadurch wird der Zugriff und die Speicherorganisation weiter vereinfacht.

Es ist dabei weiter bevorzugt, daß die Verwaltungsinformationen auch die zur Ausführung nötige Information umfassen.

Weiter ist es bevorzugt, daß die Verwaltungsinformationen auch die Informationen enthalten, welches logische Speicherbild der Datensatz benötigt, und unter welcher Bezeichnung der Datensatz aufgerufen werden kann.

Zusätzlich können die Verwaltungsinformationen vorteilhafterweise die Informationen über Größe, Basisadresse und Speicherverschlüsselung umfassen.

Weiter können die Verwaltungsinformationen vorzugsweise zusätzlich Informationen über Checksummen, Signaturen, Verschlüsselung und Notwendigkeit der Absicherung der Verbindung zu einem Datenendgerät umfassen.

Ganz allgemein ist es bei der Erfindung bevorzugt, daß die Verwaltungsinformationen Informationen darüber umfassen, zu welcher logischen Einheit die Daten gehören (Identifier), wie sie behandelt werden sollen (Mapping), wieviel Daten folgen, ob und gegebenenfalls wo weitere Daten folgen (Verkettung) und wo der nächste Datensatz beginnt.

Erfindungsgemäß führt also jede abgeschlossene Datenmenge die zur Ausführung nötige Information mit sich (Header). Damit weiß der Lader, wie er sie einmalig im Speicher ablegen muß und wie das Memory Management Unit zur Laufzeit zu programmieren ist.

In diesem Header steht, welches logische Speicherbild die Applikation erwartet und unter welchem Namen sie angefordert wird. Der Lader kann sich zusätzliche Informationen zur Dateiverwaltung im physikalischen Speicher in diesem Header ablegen (Basisadr., Größe, Speicherverschlüsselung, ...). Durch das kompakte Format läßt sich der nötige Lader ebenfalls sehr kompakt und codesparend realisieren.

Die im Header enthaltenen Informationen ließen sich theoretisch auch als Tabelle ablegen. Die Pflege einer Tabelle bedeutet aber, daß bei einer Vergrößerung bzw. Verkleinerung der gesamte restliche Speicher reorganisiert werden muß. Bei Chipkarten bedeutet dies eine komplette, langwierige Umprogrammierung des nichtflüchtigen Speichers (NVM).

Da die Verwendung von Tabellen sehr nachteilig ist, würde sich kein Programmierer die Verwendung eines bestimmten Tabellenformats vorschreiben lassen. Entwirft jeder Programmierer sein eigenes Speichersystem, führt dies zu erheblichen Problemen beim Debuggen, da Debugger im Simulator bzw. Emulator den nachgeladenen Code nicht zuordnen können. Gibt man jedoch ein grobes Speicherformat vor, so kann ein Debugger, der die Struktur kennt und dem man den Aufbau eines Headers individuell beibringen kann, den kompletten Speicher analysieren.

Die universelle Form des Headers eignet sich darüber hinaus dazu, neben Link- und Debuginformationen, auch weitere code- bzw. datenspezifische Informationen aufzunehmen: z.B. Checksummen (Integritätstest), Signaturen (trusted / untrusted Code), Verschlüsselungsinformationen, ob die serielle Verbindung von diesem Modul zum Terminal abgesichert werden muß, etc.

Dabei wird für die Zusatzinformationen immer nur soviel Speicher verbraucht, wie sie wirklich benötigen. Es muß kein Platz freigehalten werden, um weitere Module aufzunehmen, da neue Module einfach an den belegten Speicher angehängt werden.

Diese Erfindung beschreibt, wie man die Organisationsinformationen für die Zuordnung des physikalischen Speichers zu logischem Speicher und Applikation ohne eine unflexible Tabelle bewerkstelligen kann: Es wird unterschieden zwischen den eigentlichen Daten der Anwendung und den Verwaltungsdaten (Header) die zur Benutzung der Anwendung notwendig sind. Beides zusammen wird als Datensatz bezeichnet. Das Betriebssystem organisiert den physikalischen Speicher nun so, daß es alle Informationen in Form von Datensätzen im Speicher ablegt, das heißt, zunächst den Header mit den Informationen:
- zu welcher logischen Einheit gehören die folgenden Daten (Identifier)
- wie sollen sie behandelt werden (z.B. Mapping auf eine bestimmte logische Adresse oder Segment)
- wieviel Daten folgen
- eventuell Hinweis auf weitere damit verbundenen Daten (verkettete Liste)
- Informationen um den Beginn des nächsten Datensatzes ermitteln zu können

Anschließend folgen die Daten selber. Dies kann Programmcode oder Nutzdaten (Variablen, Konstanten, Datenstrukturen, ...) sein.

Der wesentliche Vorteil dieser Datenstruktur im Vergleich zur Tabellenorganisation ist die dynamische, verlustfreie, unkomplizierte Erweiterbarkeit (Hinzufügen und Entfernen weiterer Datensätze). Es wird immer nur soviel Speicher für Verwaltungsinformationen verwendet, wie wirklich Informationen abgespeichert sind, im Gegensatz zur Tabelle, für die eine feste Größe reserviert werden muß.

Ein weiterer Vorteil dieser Erfindung liegt darin, daß diese Datenstruktur auch dazu verwendet werden kann, um Lade- und Linkinformationen zwischen Applikationshersteller und Betriebssystemhersteller auszutauschen. Üblicherweise muß dazu ein spezielles Datenformat zwischen Applikations- und Betriebssystemhersteller vereinbart werden. In diesem Datenformat sind neben den Nutzdaten (Programmcode) auch Informationen enthalten, die dem Betriebssystem Aufschluß über die logische Speicherorganisation, die die Applikation benötigt, und über Verknüpfungen zu weiteren Applikationen oder Bibliotheken (Libraries) gibt. Verwendet bereits der Applikationsentwickler das gleiche Datenformat, wie es vom Betriebssystem für die Speicherdarstellung benötigt wird, wird der Lade- und Linkvorgang erheblich vereinfacht. Das hier beschriebene Datenformat würde sich auch als Austauschformat eignen.

Der Aufbau dieser Datenstruktur und das Eintragen der Organisationsinformationen kann voll in die Softwareentwicklungswerkzeuge integriert und so voll automatisiert werden. Der Applikationsentwickler muß lediglich während der Programmierung festlegen, welche Parameter für ihn wichtig sind. Die Zuordnung logischer Adressen, Linkinformationen, etc. wird automatisch durch die Entwicklungstools ergänzt und in den Header eingetragen, der später wieder vom Betriebssystem verwendet wird, um die Applikation im Speicher zu positionieren und die Laufzeitumgebung aufzubauen.

Ein weiterer Vorteil liegt in der besseren Unterstützung von Fehleranalysewerkzeugen wie Debugger auf Simulator- oder Emulatorbasis. Um effizient debuggen zu können, benötigt der Debugger die logischen Informationen der Speicheraufteilung und Anwendungszuordnung. Prinzipbedingt steht diesen Werkzeugen oft aber nur der direkte Zugriff auf das physikalische Speicherbild zur Verfügung. Um diese Informationen auswerten und sinnvoll für den Anwender aufbereiten zu können, benötigen diese Werkzeuge ebenfalls die Verwaltungsinformationen, die aber typischerweise herstellerspezifisch vom Betriebssystem verwaltet werden. Schreibt man nun dem Betriebssystemhersteller die Struktur und Position einer Verwaltungstabelle vor, bedeutet dies eine Einschränkung für den Betriebssystemhersteller und macht die Verwaltungsform (Tabelle) noch unflexibler. Die erfindungsgemäße Vorgabe einer Datensatzstruktur ist prinzipbedingt flexibel. Wird dem Debugger in einfacher Form der Syntax des Datensatz-Headers mitgeteilt (kann über weitere Softwareentwicklungswerkzeuge automatisiert werden), kommt dieser mit jedem physikalischen Speicheraufbau klar, ohne daß dem Debugger vom Betriebssystem weitere Informationen (zur Laufzeit) zur Verfügung gestellt werden müßten (z. B. Basisadressen von Tabellen oder dergleichen).

Ein Ausführungsbeispiel der Erfindung wird im folgenden anhand der in der Anlage beigefügte Zeichnung näher erläutert. Es zeigt:

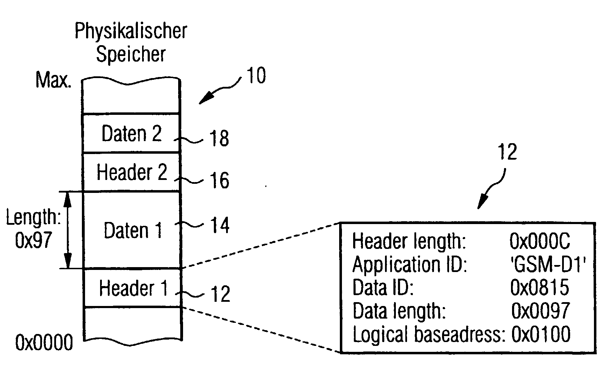

Figur 1 ein Beispiel für ein erfindungsgemässes Speicherlayout.

Der physikalische Speicher 10 beginnt bei einer Speicheradresse 0X00. Von dort aufsteigend ist der erste Header (Header 1) 12 angeordnet. Dieser Header 1 enthält folgende Informationen:
Header-Länge (Header Length), hier 0X000C,
Bezeichnung des Anwendungsprogramms (Application ID), hier "GSM-D1"
Daten-Identifikation (Data-ID) hier 0X0815,
Länge der Daten (Data Length) 0X0097,
Logische Basis-Adresse (Logical Base address) 0X0100.

Aufsteigend folgen diesem Header 1 direkt die entsprechenden Daten 14, die hier als Daten 1 bezeichnet sind. Die Länge ist in der Figur 1 ebenfalls mit Length: 0X0097 bezeichnet. Direkt anschließend an diesen Datensatz 14 erfolgt der nächste Header 16, hier als Header 2 bezeichnet. Diesem folgen wiederum seine zugeordneten Daten 18, hier als Daten 2 bezeichnet.

Die vorliegende Erfindung ist insbesondere zur Verwendung in modernen Chipkarten-Microcontrollern vorgesehen, die die Ausführung von mehreren Applikationen erlauben, wobei diese Abläufe durch ein Basis-Betriebssystem gesteuert werden. Aufgabe dieses Betriebssystems ist unter anderem die Verwaltung des physikalischen Speichers und die Zuordnung des physikalischen Speichers zu einzelnen Applikationen und zu einer logischen, applikationsspezifischen Speicheranordnung.

Gemäß dem Stand der Technik war es bisher nur möglich, ähnlich wie bei "normalen" Rechnern, die zusammengehörenden Informationen (z. B. Applikations-Kennzeichner, Adressbereiche im physikalischen Speicher, Zuordnung zu logischen Speicheradressen) in Form einer Tabelle zu verwalten. Insbesondere bei Chipkarten, bei denen die Ressourcen sehr knapp sind, tritt der Nachteil dieser Lösung, nämlich der unvariable Speicherverbrauch einer solchen Verwaltungstabelle unangenehm hervor. Die Verwaltungstabelle hat nämlich eine feste Größe, die sich nach der Maximalzahl der äußerstenfalls zu verwaltenden Applikationen richten muß, und deren Anpassung einen aufwendigen Reorganisationsprozess des ganzen Systems nach sich zieht. Erfindungsgemäß wird erstmals im Gegensatz zur getrennten Abspeicherung von Verwaltungsinformationen in einer Tabelle und den Daten, wie bei allen bisherigen Rechnern üblich, nun jeder Datensatz direkt mit seiner Verwaltungsinformation versehen. Vorzugsweise wird diese im physikalischen Speicher direkt vor dem jeweiligen Datensatz als "Header" abgelegt.

Auf diese Weise benötigt die Organisation der Verwaltungsdaten nur so viel Speicherplatz, wie für die tatsächlich vorhandenen Datensätze erforderlich ist. Es muß nicht Speicherplatz für weitere Einträge reserviert werden, die lediglich möglicherweise einmal erforderlich werden. Diese Struktur erlaubt darüber hinaus eine Effizienzsteigerung bei der Fehlersuche (beim Debuggen)und sie vereinfacht den Informationsaustausch mit den Fehlersuchprogrammen (Debugger).

## Patentansprüche

1. Verfahren zur Organisation von Datensätzen im Arbeitsspeicher eines Datenverarbeitungsgeräts, **dadurch g ekennzeichnet,** daß die Verwaltungsinformationen zu jedem Datensatz dezentral in unmittelbarer Nähe des Datensatzes angeordnet werden.

2. Verfahren nach Anspruch 1, **dadurch gekennzeichnet,** daß die Verwaltungsinformationen in Form eines direkt vor dem Datensatz im Speicher angeordneten Blockes (Header) angeordnet werden.

3. Verfahren nach Anspruch 1 oder 2, **dadurch gekennzeichnet,** daß die Verwaltungsinformationen auch die zur Ausführung nötige Information umfassen.

4. Verfahren nach einem der Ansprüche 1 bis 3, **dadurch gekennzeichnet,** daß die Verwaltungsinformationen auch die Informationen enthalten, welches logische Speicherbild der Datensatz benötigt, und unter welcher Bezeichnung der Datensatz aufgerufen werden kann.

5. Verfahren nach Anspruch 4, **dadurch gekennzeichnet,** daß die Verwaltungsinformationen zusätzlich die Informationen über Größe, Basisadresse und Speicherverschlüsselung umfassen können.

6. Verfahren nach Anspruch 5, **dadurch gekennzeichnet,** daß die Verwaltungsinformationen zusätzlich Informationen über Checksummen, Signaturen, Verschlüsselung und Notwendigkeit der Absicherung der Verbindung zu einem Datenendgerät umfassen können.

7. Verfahren nach einem der Ansprüche 1 bis 6, **dadurch gekennzeichnet,** daß die Verwaltungsinformationen Informationen darüber umfassen, zu welcher logischen Einheit die Daten gehören (Identifier), wie sie behandelt werden sollen (Mapping), wieviel Daten folgen, ob und ggf. wo weitere Daten folgen (Verkettung) und wo der nächste Datensatz beginnt.
